# EUROPÄISCHE PATENTSCHRIFT

(11) **EP 4 345 410 B1**
(45) Veröffentlichungstag und Bekanntmachung des Hinweises auf die Patenterteilung: **19.11.2025**
(21) Anmeldenummer: 23199871.7
(22) Anmeldetag: 26.09.2023
(51) Int. Cl.: G01B 5/20, G01B 5/28

(54) **OBERFLÄCHENMESSGERÄT**
SURFACE MEASURING APPARATUS
APPAREIL DE MESURE DE SURFACE

(30) Priorität: 27.09.2022 DE 102022124770
(43) Veröffentlichungstag der Anmeldung: 03.04.2024
(73) Patentinhaber: JENOPTIK Industrial Metrology Germany GmbH, 78052 Villingen-Schwenningen (DE)
(72) Erfinder: STEUER, Philipp, 78647 Trossingen (DE)
(74) Vertreter: Hoefer & Partner Patentanwälte mbB

(56) Entgegenhaltungen:
- DE-A1- 2 804 398
- DE-A1- 2 811 969
- DE-B4- 4 413 968
- DE-T2- 3 789 875
- DE-T2- 602004 011 544
- DE-T2- 69 205 634

## Beschreibung

Die Erfindung betrifft ein Oberflächenmessgerät der im Oberbegriff des Anspruchs 1 genannten Art.

Entsprechende Oberflächenmessgeräte sind, beispielsweise in Form von taktilen Oberflächenmessgeräten und insbesondere Rauheitsmessgeräten, allgemein bekannt. Sie weisen einen Grundkörper und einen mittels einer Vorschubeinrichtung entlang einer Vorschubachse beweglichen Taster zur Antastung der Oberfläche eines zu vermessenen Bauteils auf. Zur Vermessung eines Bauteils wird der Taster mittels der Vorschubeinrichtung entlang der Vorschubachse bewegt, wobei ein Tastelement des Tastarmes die Oberfläche abtastet, beispielsweise und insbesondere mechanisch mittels eines an einem schwenkbar gelagerten Tastarm angeordneten Tastkörpers.

Zur Erfüllung unterschiedlicher Messaufgaben ist es wünschenswert, den Tastarm um eine in Längsrichtung des Tastarmes verlaufende Drehachse zu drehen, um beispielsweise ein rotationssymmetrisches Bauteil in Form einer Welle in Umfangsrichtung an verschiedenen Stellen abzutasten, und zwar beispielsweise in Form von in Axialrichtung der Welle verlaufenden Tastschnitten.

Hierzu sind Oberflächenmessgeräte mit einer relativ zu einem Grundkörper um eine Drehachse drehbar gelagerten und mittels eines elektromotorischen Antriebsstranges drehpositionierbaren Tasterhalterung für einen Taster des Oberflächenmessgerätes bekannt. Bei einer Drehung der Tasterhalterung und damit des Tasters um die Drehachse muss die jeweilige Drehlage reproduzierbar sein und spielfrei gehalten werden.

Damit die jeweilige Drehlage spielfrei gehalten wird, ist es erforderlich, den elektromotorischen Antriebsstrang zwischen einem Elektromotor des Antriebsstranges und der drehbar gelagerten Tasterhalterung im Rahmen der erforderlichen Reproduzierbarkeit spielfrei auszubilden. Entsprechende spielfreie Antriebsstränge sind aufwendig in der Fertigung und verursachen hohe Kosten, was insbesondere für spielfreie Getriebe gilt.

Es sind auch Oberflächenmessgeräte bekannt, bei denen die erforderliche Reproduzierbarkeit dadurch erzielt werden soll, dass der elektromotorische Antriebsstrang die Tasterhalterung entgegen der Wirkung einer Bremse verdreht. Bei einer entsprechenden Ausführungsform wird an der Eingriffsstelle der Bremse Wärme erzeugt, was im Sinne der Vermeidung von thermischen Effekten in einem Messgerät unerwünscht ist. Außerdem erfordert die Verwendung einer Bremse einen Antriebsstrang mit entsprechend hohem Drehmoment.

Durch DE 28 11 969 A1 ist eine Messvorrichtung zur Vermessung von Kegelrollenlagern bekannt, bei der ein Radial-Tastkopf in zwei um 90° versetzten Stellungen arretiert werden kann.

Durch DE 37 89 875 T2 ist ein Oberflächenmessgerät mit den Merkmalen des Oberbegriffs des Anspruchs 1 bekannt.

Der Erfindung liegt die Aufgabe zugrunde, ein Oberflächenmessgerät der im Oberbegriff des Anspruchs 1 genannten Art anzugeben, das gegenüber den bekannten Oberflächenmessgeräten verbessert ist.

Diese Aufgabe wird durch die im Anspruch 1 angegebene Erfindung gelöst.

Die Erfindung sieht vor, dass der Antriebsstrang ein Schneckengetriebe aufweist und der Tasterhalterung Rastmittel zur Verrastung der Tasterhalterung in vordefinierten Drehlagen zugeordnet sind.

Der Grundgedanke der Erfindung besteht darin, zur Reduzierung der Herstellungskosten des Oberflächenmessgeräts bewusst auf ein im hohen Maße spielfreies Getriebe, das aufwendig und damit teuer in der Herstellung ist, zu verzichten und stattdessen ein zwar spielbehaftetes, aber kostengünstiges Schneckengetriebe zu verwenden. Hiervon ausgehend wird die erforderliche Reproduzierbarkeit bei der Drehpositionierung der Tasterhalterung erfindungsgemäß dadurch erzielt, dass Rastmittel vorgesehen sind, mittels derer die Tasterhalterung in vordefinierten Drehlagen relativ zu dem Grundkörper verrastet. Entsprechende Rastmittel können ebenfalls einfach und damit kostengünstig realisiert werden.

Die Erfindung sieht vor, dass die Rastmittel ein erstes Bauteil und ein zweites Bauteil aufweisen, von denen eines drehfest mit der Tasterhalterung und das andere drehfest mit dem Grundkörper verbunden ist, wobei an einem der Bauteile wenigstens ein Rastelement und an dem anderen Bauteil eine Mehrzahl von in Umfangsrichtung der Drehachse zueinander beabstandeten Rastausnehmungen gebildet sind, von denen jede eine der vordefinierten Drehlagen der Tasterhalterung relativ zu dem Grundkörper definiert und in die das Rastelement in der jeweiligen Drehlage der Tasterhalterung relativ zu dem Grundkörper einrastet. Auf diese Weise sind die Rastmittel besonders einfach und kostengünstig gestaltet.

Erfindungsgemäß wird damit durch die Verrastung das Spiel des Antriebsstranges aufgehoben.

Die Erfindung stellt damit ein Oberflächenmessgerät mit elektromotorisch drehpositionierbarer Tasterhalterung bereit, das einfach und kostengünstig im Aufbau sowie robust ist und gleichzeitig eine hohe Positioniergenauigkeit und Reproduzierbarkeit bei der Drehung der Tasterhalterung um die Drehachse gewährleistet.

Ein weiterer Vorteil des erfindungsgemäßen Oberflächenmessgeräts besteht darin, dass die Montage des elektromotorischen Antriebsstranges bei der Fertigung des Oberflächenmessgeräts einfach ist. Außerdem ermöglicht die Erfindung eine Nachrüstung von Oberflächenmessgeräten, bei denen werksmäßig die Verdrehung der Tasterhalterung manuell erfolgt.

Bei dem erfindungsgemäßen Oberflächenmessgerät kann es sich beispielsweise insbesondere um ein taktiles Oberflächenmessgerät handeln.

Die Drehachse, um die die Tasterhalterung relativ zu dem Grundkörper drehbar gelagert ist, verläuft vorzugsweise parallel zur Vorschubachse einer Vorschubeinrichtung des Oberflächenmessgeräts bzw. parallel zur Längsrichtung eines Tastarmes des Tasters.

Zweckmäßigerweise sind zur Verrastung der Tasterhalterung die Rastausnehmungen wenigstens abschnittsweise zu dem Rastelement komplementär ausgebildet.

Im Sinne eines einfachen Aufbaus der Rastmittel sieht eine andere vorteilhafte Weiterbildung der Erfindung vor, dass das Rastelement in einer Rastrichtung beweglich gelagert ist.

Eine außerordentlich vorteilhafte Weiterbildung der Erfindung sieht vor, dass das Rastelement in der Rastrichtung durch Federmittel vorgespannt ist. Bei dieser Ausführungsform rastet das Rastelement federbelastet in die jeweilige Rastausnehmungen ein und wird durch das Antriebsdrehmoment des Elektromotors des elektromotorischen Antriebsstranges entgegen der Vorspannung der Federmittel entrastet.

Die Ausgestaltung des Rastelements ist entsprechend den jeweiligen Anforderungen innerhalb weiter Grenzen wählbar. Eine vorteilhafte Weiterbildung der Erfindung sieht insoweit vor, dass das Rastelement eine Kugel aufweist. Entsprechende Kugeln stehen als hochpräzise bearbeitete, gleichzeitig aber sehr kostengünstige Standardbauteile zur Verfügung und gewährleisten eine präzise definierte Geometrie bei der Verrastung.

Eine andere vorteilhafte Weiterbildung der Erfindung sieht vor, dass das Rastelement relativ zu den Rastausnehmungen derart angeordnet ist, dass die Rastrichtung parallel zu der Drehachse verläuft, derart, dass sich das Rastelement beim Verrasten bzw. Entrasten parallel zu der Drehachse bewegt.
Um den Rast- bzw. Entrastvorgang einfach und sicher zu gestalten, sieht eine andere vorteilhafte Weiterbildung der Ausführungsform mit den Federmitteln vor, dass die Federbelastung des Rastelementes relativ zu dem Antriebsdrehmoment eines Elektromotors des elektromotorischen Antriebsstranges derart gewählt ist, dass das Rastelement bei Drehung des ersten Bauteiles relativ zu dem zweiten Bauteil durch den Elektromotor entrastet.

Eine andere vorteilhafte Weiterbildung der Erfindung sieht vor, dass das Rastelement mittels einer Halterung beweglich mit dem zugeordneten Bauteil verbunden ist.

Eine Weiterbildung der vorgenannten Ausführungsform sieht vor, dass die Halterung durch eine Blattfeder gebildet ist. Bei dieser Ausführungsform übt die Blattfeder zum einen eine Haltefunktion für das Rastelement aus. Gleichzeitig ist das Rastelement durch die Blattfeder in Rastrichtung federbelastet. Zusätzlich zu der Blattfeder können jedoch noch weitere Federmittel, beispielsweise in Form einer Druckfeder, insbesondere Schraubenfeder, vorgesehen sein, um eine Vorspannung in Rastrichtung zu bewirken.

Um zu verhindern, dass der Drehhub beim Verdrehen der Tasterhalterung um die Drehachse begrenzt ist, sieht eine andere vorteilhafte Weiterildung der Erfindung vor, dass zur Übertragung von Ausgangssignalen eines an der Tasterhalterung befestigten Tasters zu einer Auswertungseinrichtung des Oberflächenmessgerätes Schleifringkontakte vorgesehen sind.

Eine andere vorteilhafte Weiterbildung der Erfindung sieht vor, dass das Schneckengetriebe eine in Drehantriebsverbindung mit einem Elektromotor des elektromotorischen Antriebsstranges stehende Schnecke aufweist, die in Eingriff mit einem Schneckenrad steht. Dabei ist es grundsätzlich ausreichend, wenn die Untersetzung der Antriebsdrehzahl des Elektromotors ausschließlich durch das Schneckenradgetriebe bewirkt wird, sodass sich weitere Getriebeelemente in dem Antriebsstrang erübrigen.

Im Sinne eines einfachen Aufbaus des Antriebsstranges sieht eine vorteilhafte Weiterbildung der Erfindung vor, dass das Schneckenrad drehfest mit einer drehbar gelagerten Welle verbunden ist, die die Drehachse definiert.

Zweckmäßigerweise ist das Schneckengetriebe ein selbsthemmendes Schneckengetriebe, wie dies eine andere vorteilhafte Weiterbildung der Erfindung vorsieht.

Die Erfindung wird nachfolgend unter Bezugnahme auf die beigefügte, schematisierte Zeichnung anhand eines Ausführungsbeispiels näher erläutert.

Es zeigt:
- Fig. 1: in schematisierter Perspektivansicht ein Ausführungsbeispiel eines erfindungsgemäßen Oberflächenmessgeräts, wobei ein Gehäuse des Oberflächenmessgeräts aus Gründen der Veranschaulichung weggelassen ist,
- Fig. 2: in gleicher Darstellung wie Fig. 1 das Ausführungsbeispiel gemäß Fig. 1 aus einer anderen Perspektive,
- Fig. 3: in gleicher Darstellung wie Fig. 1 das Ausführungsbeispiel gemäß Fig. 1, wobei gegenüber Fig. 1 Bauteile weggelassen sind,
- Fig. 4: schematisiert in einer teilweise geschnittenen Perspektivansicht das Ausführungsbeispiel gemäß Fig. 1,
- Fig. 5: in gleicher Darstellung wie Fig. 4 das Ausführungsbeispiel gemäß Fig. 1, wobei gegenüber Fig. 4 Bauteile weggelassen sind,
- Fig. 6: in gleicher Darstellung wie Fig. 5 aus einer anderen Perspektive das Ausführungsbeispiel gemäß Fig. 1 und
- Fig. 7: in gleicher Darstellung wie Fig. 6 eine Einzelheit aus Fig. 6 im Bereich eines Rastelementes.

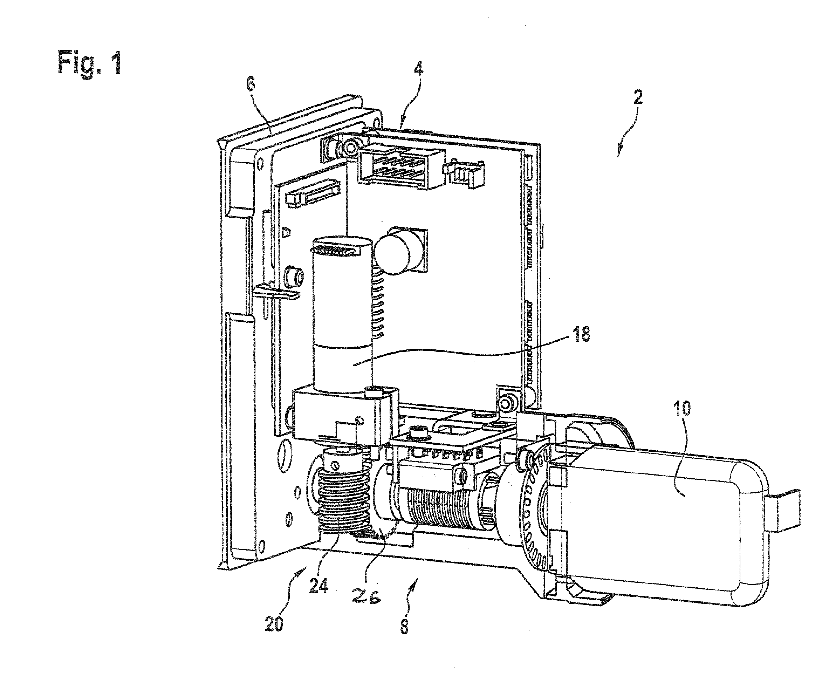

Nachfolgend wird unter Bezugnahme auf Fig. 1 bis Fig. 7 ein Ausführungsbeispiel eines erfindungsgemäßen Oberflächenmessgeräts näher erläutert.

Fig. 1 zeigt in einer schematischen Perspektivansicht ein Ausführungsbeispiel eines erfindungsgemäßen Oberflächenmessgeräts 2, das einen Grundkörper 4 aufweist. Der Grundkörper 4 weist eine Grundplatte 6, an der die Komponenten des Oberflächenmessgeräts 2 montiert sind, sowie ein Gehäuse auf, das aus Gründen der Veranschaulichung in der Zeichnung weggelassen ist. Bei dem dargestellten Ausführungsbeispiel ist das Oberflächenmessgerät 2 als taktiles Oberflächenmessgerät ausgebildet. Aufbau und Funktionsweise entsprechender Oberflächenmessgeräte sind dem Fachmann allgemein bekannt und werden daher hier nur insoweit näher erläutert, wie es zur Erläuterung der Erfindung erforderlich ist.

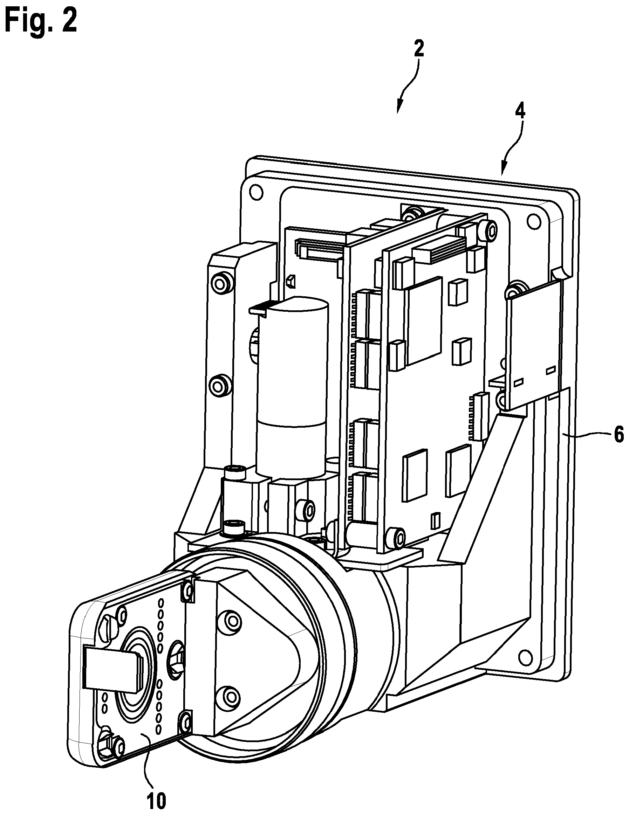

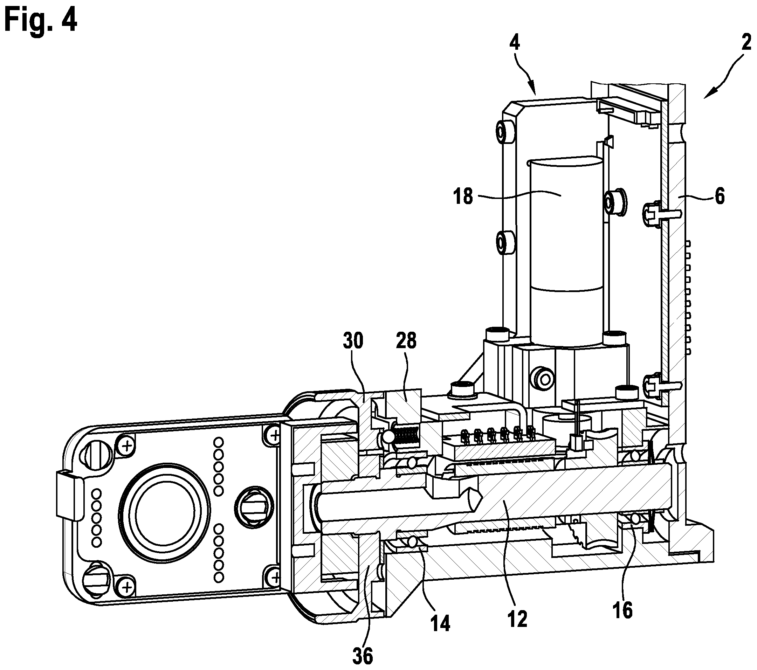

Das Oberflächenmessgerät 2 weist eine relativ zu dem Grundkörper 4 um eine Drehachse drehbar gelagerte und mittels eines elektromotorischen Antriebsstranges 8 drehpositionierbare Tasterhalterung 10 für einen Taster des Oberflächenmessgeräts 2 auf. Zur Vereinfachung der Darstellung ist der Taster in der Zeichnung nicht gezeigt. Details der Tasterhalterung sind insbesondere in den Figuren 2 und 4 erkennbar. Aufbau und Funktionsweise einer entsprechenden Tasterhalterung sind dem Fachmann allgemein bekannt und werden daher hier nicht näher erläutert.

Die Drehachse, um die die Tasterhalterung 10 relativ zu dem Grundkörper 4 drehbar gelagert ist, ist durch eine drehbar gelagerte Welle 12 (vgl. Fig. 4) definiert, die über Kugellager 14, 16 an dem Grundkörper 4 drehbar gelagert und drehfest mit der Tasterhalterung 10 verbunden ist.

Die drehbar gelagerte Welle 12 steht über den elektromotorischen Antriebsstrang 8 in Drehantriebsverbindung mit einem Elektromotor 18.

Erfindungsgemäß weist der Antriebsstrang 8 ein Schneckengetriebe 20 auf, wobei der Tasterhalterung 10 Rastmittel 22 zur Verrastung der Tasterhalterung 10 in vordefinierten Drehlagen relativ zu dem Grundkörper 4 zugeordnet sind.

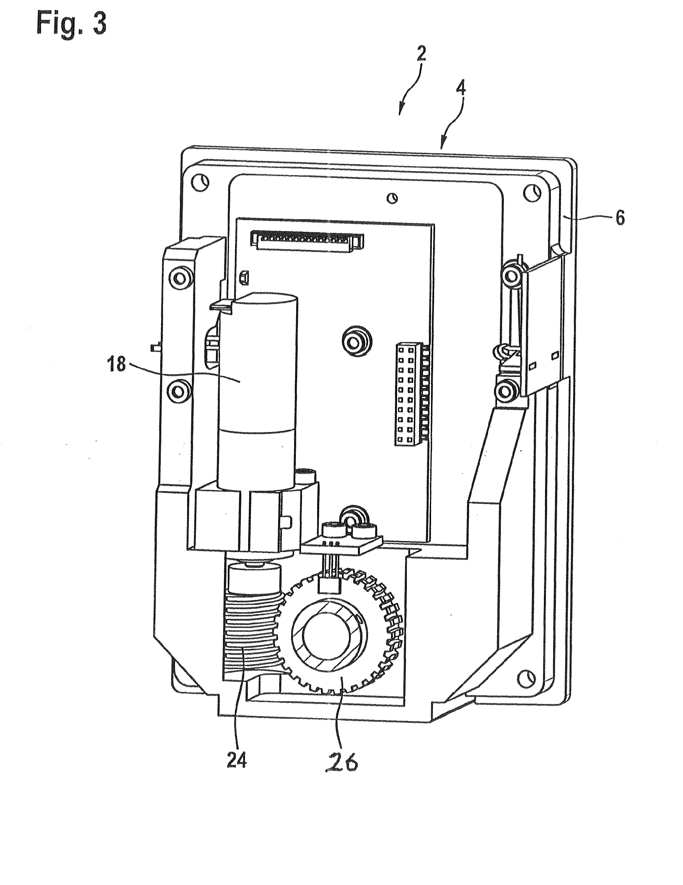

Das Schneckengetriebe 20 weist eine drehfest mit einer Abtriebswelle des Elektromotors 18 verbundene Schnecke 24 auf, die mit einem Schneckenrad 26 in Eingriff steht (vgl. Fig. 3), das drehfest mit der Welle 12 verbunden ist (vgl. Fig. 4). Bei dem dargestellten Ausführungsbeispiel ist das Schneckengetriebe 20 selbsthemmend ausgebildet
Entsprechend der Drehrichtung der Abtriebswelle des Elektromotors 18 ist somit die Welle 12 und damit die Tasterhalterung 10 um die durch die Welle 12 definierte Drehachse drehbar.

Spannungsversorgungs- und Steuerungsmittel des elektromotorischen Antriebsstranges 8 sind in der Zeichnung nicht dargestellt. Der Aufbau entsprechender Spannungsversorgungs- und Steuerungsmittel ist dem Fachmann jedoch allgemein bekannt.

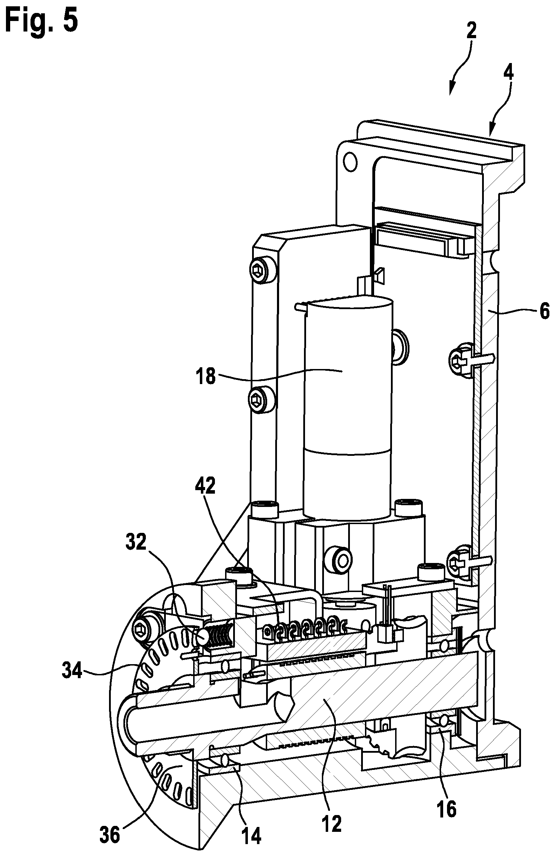

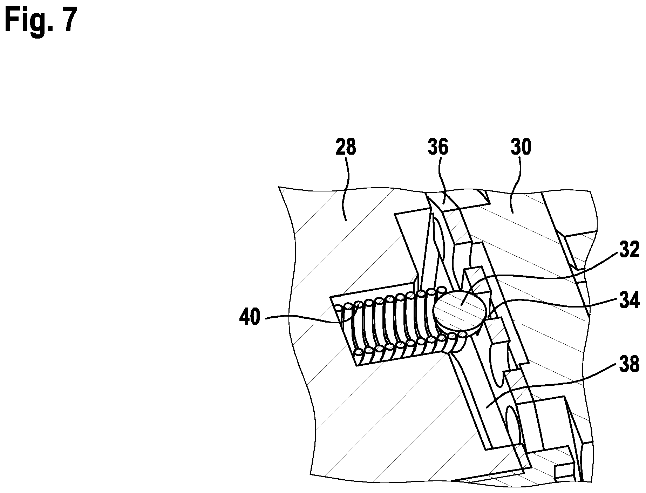

Die Rastmittel 22 weisen bei dem dargestellten Ausführungsbeispiel ein erstes Bauteil 28 und ein zweites Bauteil 30 (vgl. Fig. 4) auf, von denen eines, nämlich das Bauteil 30, drehfest mit der Tasterhalterung 10 und das andere, nämlich das Bauteil 28, drehfest mit dem Grundkörper 4 verbunden ist. An dem Bauteil 28 ist ein Rastelement 32 in Form einer Kugel (vgl. insbesondere Fig. 7) angeordnet. An dem anderen Bauteil 30 ist eine Mehrzahl von in Umfangsrichtung der Drehachse zueinander beabstandeten Rastausnehmungen gebildet (vgl. Fig. 5), von denen jede eine der vordefinierten Drehlagen der Tasterhalterung 10 relativ zu dem Grundkörper definiert und in die das Rastelement 32 in der jeweiligen Drehlage der Tasterhalterung 10 relativ zu dem Grundkörper 4 einrastet. In Fig. 5 ist lediglich eine Rastausnehmung mit dem Bezugszeichen 34 bezeichnet.

Wie insbesondere aus Fig. 5 ersichtlich ist, weist das zweite Bauteil einen scheibenförmigen Abschnitt 36 auf, in dem Durchbrüche gebildet sind, die die Rastausnehmungen 34 bilden. Zur Verrastung des zweiten Bauteils 30 mit dem ersten Bauteil 28 und damit zur Verrastung der Tasterhalterung 10 mit dem Grundkörper 4 sind die Rastausnehmungen 34 wenigstens abschnittsweise zu dem Rastelement 32 komplementär geformt.

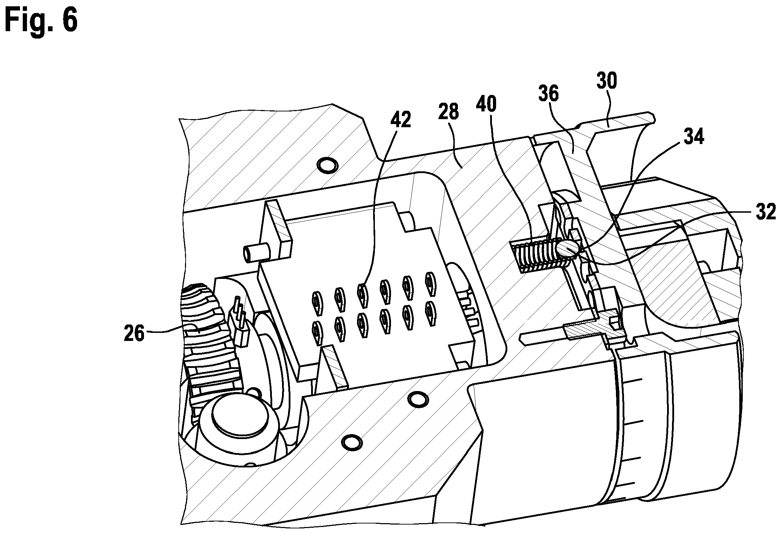

Das als Kugel ausgebildete Rastelement 32 ist in Fig. 6 und insbesondere in Fig. 7 näher dargestellt. Das Rastelement 32 ist mit dem Bauteil 28 mittels einer Halterung beweglich verbunden, die bei dem dargestellten Ausführungsbeispiel durch eine Blattfeder 38 gebildet ist. Dabei hat die Blattfeder 38 zum einen die Funktion einer Halterung für das Rastelement 32 und bewirkt zum anderen eine Vorspannung des Rastelements 32 in Richtung auf den gegenüberliegenden scheibenförmigen Abschnitt 36 des Bauteils 30.

Das Rastelement 32 ist durch Federmittel in Form einer als Schraubenfeder ausgebildeten Druckfeder 40 vorgespannt und bei dem dargestellten Ausführungsbeispiel in einer Rastrichtung beweglich gelagert. Bei dem dargestellten Ausführungsbeispiel ist das Rastelement 32 relativ zu den Rastausnehmungen 34 derart angeordnet, dass die Rastrichtung parallel zu der Drehachse verläuft und sich das Rastelement 32 beim Verrasten bzw. Entrasten parallel zu der Drehachse bewegt.

In Abwandlung des in der Zeichnung dargestellten Ausführungsbeispiels kann das Rastelement auch in Radialrichtung der Drehachse beweglich gelagert sein, wobei die Rastausnehmungen dann beispielsweise in Umfangsrichtung zueinander beabstandet in der äußeren Umfangsfläche eines walzenartigen Abschnitts des zweiten Bauteils 30 gebildet sein können.

Die Schrittweite bei der Drehpositionierung der Tasterhalterung 10 relativ zu dem Grundkörper 4 ist durch den Abstand der Rastausnehmungen 34 in Umfangsrichtung der Drehachse definiert. Um die Schrittweite bei der Drehpositionierung zu verkleinern, können bei dem dargestellten Ausführungsbeispiel in dem scheibenförmigen Abschnitt 36 in Radialrichtung versetzt zu den Rastausnehmungen 34 weitere Rastausnehmungen mit einem zugeordneten Rastelement vorgesehen sein. Die weiteren Rastausnehmungen sind dann zu den Rastausnehmungen 34 in Umfangsrichtung versetzt angeordnet.

Die vor allem durch die Druckfeder 40 bewirkte Vorspannung des Rastelementes 32 in Richtung auf die Rastausnehmungen 34 ist relativ zu dem Antriebsdrehmoment des Elektromotors 18 derart gewählt, dass das Rastelement bei Drehung des ersten Bauteiles 28 relativ zu dem zweiten Bauteil 30 durch den Elektromotor 18 entgegen der Vorspannung der Federmittel aus der jeweiligen Rastausnehmung 34 herausgedrückt wird und dadurch entrastet.

Zur Übertragung von Ausgangssignalen eines an der Tasterhalterung 10 befestigten Tasters zu einer an dem Grundkörper 4 angeordneten oder externen Auswertungseinrichtung des Oberflächenmessgeräts 2 sind Schleifringkontakte 42 vorgesehen (vgl. Fig. 4 und Fig. 6). Auf diese Weise ist die Tasterhalterung 10 relativ zu dem Grundkörper 4 in jeder Drehrichtung endlos drehbar.

Die Funktionsweise des erfindungsgemäßen Oberflächenmessgeräts 2 ist wie folgt:
Zur Vermessung einer Oberfläche eines Werkstücks mittels des Oberflächenmessgeräts 2 ist an der Tasterhalterung 10 ein beispielsweise taktiler Taster befestigt, mittels dessen die Oberfläche des Werkstücks mit einem Tastkörper angetastet wird. Durch Bewegung des Tastkörpers entlang einer Vorschubachse mittels einer Vorschubeinrichtung des Oberflächenmessgeräts 2 wird das Werkstück abgetastet, beispielsweise bei Vermessung einer Welle in deren Axialrichtung.

Um die Messung in Umfangsrichtung der Welle an einer anderen Stelle zu wiederholen, wird die Drehlage der Tasterhalterung 10 und damit des Tasters relativ zu dem Grundkörper 4 geändert.

Zur Drehpositionierung der Tasterhalterung 10 treibt der Elektromotor 18 das Schneckengetriebe 20 derart an, dass sich die Welle 12 und damit die mit der Welle 12 drehfest verbundene Tasterhalterung 10 um die durch die Welle 12 definierte Drehachse dreht. Während der Drehung der Tasterhalterung 10 um die Drehachse wird das Rastelement 32 entgegen der Vorspannung der Federmittel aus einer Rastausnehmung herausgedrückt, bewegt sich in Umfangsrichtung der Drehachse relativ zu dem scheibenförmigen Abschnitt 36 und rastet in die in Umfangsrichtung nächste Rastausnehmung ein. Der Vorgang des Entrastens aus einer Rastausnehmung 34 und des Einrastens in die in Umfangsrichtung nächste Rastausnehmung wiederholt sich, bis die gewünschte Drehlage der Tasterhalterung 10 erreicht ist und der Elektromotor 18 stillgesetzt wird.

In der dann erreichten Drehlage ist die Tasterhalterung 10 mit dem Grundkörper 4 verrastet und dadurch spielfrei mit dem Grundkörper 4 verbunden. Durch die erfindungsgemäß vorgesehene Verrastung ist damit mechanisches Spiel in dem elektromotorischen Antriebsstrang 8 aufgehoben.

Aufgrund der Kombination eines spielbehafteten Schneckengetriebes mit Rastmitteln, die das Spiel aufheben, stellt die Erfindung ein Oberflächenmessgerät bereit, das bei einem einfachen und kostengünstigen Aufbau eine präzise Drehpositionierung der Tasterhalterung mit hoher Reproduzierbarkeit ermöglicht.

### Bezugszeichenliste

- 2: Oberflächenmessgerät
- 4: Grundkörper
- 6: Grundplatte
- 8: elektromotorischer Antriebsstrang
- 10: Tasterhalterung
- 12: Welle
- 14: Kugellager
- 16: Kugellager
- 18: Elektromotor
- 20: Schneckengetriebe
- 22: Rastmittel
- 24: Schnecke
- 26: Schneckenrad
- 28: 1. Bauteil
- 30: 2. Bauteil
- 32: Rastelement
- 34: Rastausnehmung
- 36: scheibenförmigen Abschnitt
- 38: Blattfeder
- 40: Druckfeder
- 42: Schleifringkontakte

## Patentansprüche

1. Oberflächenmessgerät (2),
mit einem Grundkörper (4) und
mit einer relativ zu dem Grundkörper (4) um eine Drehachse drehbar gelagerten und mittels eines elektromotorischen Antriebsstranges (8) drehpositionierbaren Tasterhalterung (10) für einen Taster des Oberflächenmessgerätes,
wobei der Antriebsstrang (8) ein Schneckengetriebe (20) aufweist,
**dadurch gekennzeichnet,**
**dass** der Tasterhalterung (10) Rastmittel (22) zur Verrastung der Tasterhalterung (10) in vordefinierten Drehlagen zugeordnet sind und
**dass** die Rastmittel (22) ein erstes Bauteil (28) und ein zweites Bauteil (30) aufweisen, von denen eines drehfest mit der Tasterhalterung (10) und das andere drehfest mit dem Grundkörper (4) verbunden ist, wobei an einem der Bauteile (28, 30) wenigstens ein Rastelement (32) und an dem anderen Bauteil eine Mehrzahl von in Umfangsrichtung der Drehachse zueinander beabstandeten Rastausnehmungen (34) gebildet sind, von denen jede eine der vordefinierten Drehlagen der Tasterhalterung (10) relativ zu dem Grundkörper (4) definiert und in die das Rastelement in der jeweiligen Drehlage der Tasterhalterung (10) relativ zu dem Grundkörper (4) einrastet.

2. Oberflächenmessgerät nach Anspruch 1, **dadurch gekennzeichnet, dass** zur Verrastung der Tasterhalterung (10) die Rastausnehmungen (34) wenigstens abschnittsweise zu dem Rastelement (32) komplementär geformt sind.

3. Oberflächenmessgerät nach Anspruch 1 oder 2, **dadurch gekennzeichnet, dass** das Rastelement (32) in einer Rastrichtung beweglich gelagert ist.

4. Oberflächenmessgerät nach einem der vorhergehenden Ansprüche, **dadurch gekennzeichnet, dass** das Rastelement (32) in der Rastrichtung durch Federmittel vorgespannt ist.

5. Oberflächenmessgerät nach einem der vorhergehenden Ansprüche, **dadurch gekennzeichnet, dass** das Rastelement (32) eine Kugel aufweist.

6. Oberflächenmessgerät nach einem der vorhergehenden Ansprüche, **dadurch gekennzeichnet, dass** das Rastelement (32) relativ zu den Rastausnehmungen (34) derart angeordnet ist, dass die Rastrichtung parallel zu der Drehachse verläuft und sich das Rastelement (32) beim Verrasten bzw. Entrasten parallel zu der Drehachse bewegt.

7. Oberflächenmessgerät nach Anspruch 5 oder 6 **dadurch gekennzeichnet, dass** die Vorspannung des Rastelementes (32) relativ zu dem Antriebsdrehmoment eines Elektromotors (18) des elektromotorischen Antriebsstranges (8) derart gewählt ist, dass das Rastelement (32) bei Drehung des ersten Bauteiles (28) relativ zu dem zweiten Bauteil (30) durch den Elektromotor (18) entrastet.

8. Oberflächenmessgerät nach einem der vorhergehenden Ansprüche, **dadurch gekennzeichnet, dass** das Rastelement (32) mittels einer Halterung beweglich mit dem zugeordneten Bauteil verbunden ist.

9. Oberflächenmessgerät nach Anspruch 8, **dadurch gekennzeichnet, dass** die Halterung durch eine Blattfeder (38) gebildet ist.

10. Oberflächenmessgerät nach einem der vorhergehenden Ansprüche, **dadurch gekennzeichnet, dass** zur Übertragung von Ausgangssignalen eines an der Tasterhalterung befestigten Tasters zu einer Auswertungseinrichtung des Oberflächenmessgerätes Schleifringkontakte (42) vorgesehen sind.

11. Oberflächenmessgerät nach einem der vorhergehenden Ansprüche, **dadurch gekennzeichnet, dass** das Schneckengetriebe (20) eine in Drehantriebsverbindung mit einem Elektromotor (18) des elektromotorischen Antriebsstranges (8) stehende Schnecke (24) aufweist, die in Eingriff mit einem Schneckenrad (26) steht.

12. Oberflächenmessgerät nach Anspruch 11, **dadurch gekennzeichnet, dass** das Schneckenrad (26) drehfest mit einer drehbar gelagerten Welle (12) verbunden ist, die die Drehachse definiert.

## Claims

1. Surface measuring device (2),
with a base body (4) and
with a probe carrier (10) mounted rotatably about an axis of rotation relative to the base body (4) and rotatably positionable by an electromotive drive train (8) for a probe of the surface measuring device,
wherein the drive train (8) has a worm gear (20),
**characterized in that**
latching means (22) for latching the probe carrier (10) in predetermined rotational positions are associated with the probe carrier (10) and
the latching means (22) have a first component (28) and a second component (30), one of which is connected to the probe carrier (10) in a rotationally fixed manner and the other of which is connected to the base body (4) in a rotationally fixed manner, wherein at least one latching element (32) is formed on at least one of the components (28, 30) and a plurality of latching recesses (34) spaced apart from one another in the circumferential direction of the axis of rotation are formed on the other component, each of which defines one of the predetermined rotational positions of the probe carrier (10) relative to the base body (4) and in which the latching element latches in the respective rotational position of the probe carrier (10) relative to the base body (4).

2. Surface measuring device according to Claim 1, **characterized in that** the latching recesses (34) for latching the probe carrier (10) are formed at least in sections in a complementary manner to the latching element (32).

3. Surface measuring device according to Claim 1 or 2, **characterized in that** the latching element (32) is mounted movably in a latching direction.

4. Surface measuring device according to one of the preceding claims, **characterized in that** the latching element (32) is prestressed in the latching direction by spring means.

5. Surface measuring device according to one of the preceding claims, **characterized in that** the latching element (32) has a ball.

6. Surface measuring device according to one of the preceding claims, **characterized in that** the latching element (32) is arranged with respect to the latching recesses (34) in such a way that the latching direction runs parallel to the axis of rotation and the latching element (32) moves parallel to the axis of rotation during latching or unlatching.

7. Surface measuring device according to Claim 5 or 6, **characterized in that** the preload of the latching element (32) with respect to the drive torque of an electric motor (18) of the electromotive drive train (8) is selected in such a way that the latching element (32) is unlatched by the electric motor (18) during rotation of the first component (28) relative to the second component (30).

8. Surface measuring device according to one of the preceding claims, **characterized in that** the latching element (32) is connected movably to the associated component by means of a carrier.

9. Surface measuring device according to Claim 8, **characterized in that** the carrier is formed by a leaf spring (38).

10. Surface measuring device according to one of the preceding claims, **characterized in that** slip ring contacts (42) are provided for transmitting the output signals from a probe which is fastened to the probe carrier to an evaluation device of the surface measuring device.

11. Surface measuring device according to one of the preceding claims, **characterized in that** the worm gear (20) has a worm (24) which is rotationally drive-connected to an electric motor (18) of the electromotive drive train (8) and which is in engagement with a worm wheel (26).

12. Surface measuring device according to Claim 11, **characterized in that** the worm wheel (26) is connected in a rotationally fixed manner to a rotatably mounted shaft (12) which defines the axis of rotation.

## Revendications

1. Appareil de mesure de surface (2),
avec un corps de base (4) et
avec un support de sonde (10) monté de manière rotative autour d'un axe de rotation par rapport au corps de base (4) et pouvant être positionné en rotation par une chaîne cinématique électromotorisée (8) pour une sonde de l'appareil de mesure de surface,
dans lequel la chaîne cinématique (8) présente un engrenage à vis sans fin (20),
**caractérisé en ce**
**que** des moyens d'enclenchement (22) destinés à enclencher le support de sonde (10) dans des positions de rotation prédéfinies sont associés au support de sonde (10) et
**que** les moyens d'enclenchement (22) présentent un premier composant (28) et un deuxième composant (30), dont l'un est relié de manière solidaire en rotation au support de sonde (10) et l'autre est relié de manière solidaire en rotation au corps de base (4), dans lequel est formé, sur au moins un des composants (28, 30), au moins un élément d'enclenchement (32) et sont formés sur l'autre composant une multitude d'évidements d'enclenchement (34) espacés les uns des autres dans la direction circonférentielle de l'axe de rotation, dont chacun définit une des positions de rotation prédéfinies du support de sonde (10) par rapport au corps de base (4), et dans lesquels l'élément d'enclenchement s'enclenche dans la position de rotation respective du support de sonde (10) par rapport au corps de base (4).

2. Appareil de mesure de surface selon la revendication 1, **caractérisé en ce que** les évidements d'enclenchement (34) sont formés de manière complémentaire à l'élément d'enclenchement (32) au moins par sections pour l'enclenchement du support de sonde (10).

3. Appareil de mesure de surface selon la revendication 1 ou 2, **caractérisé en ce que** l'élément d'enclenchement (32) est monté de manière mobile dans une direction d'enclenchement.

4. Appareil de mesure de surface selon l'une quelconque des revendications précédentes, **caractérisé en ce que** l'élément d'enclenchement (32) est précontraint dans la direction d'enclenchement par des moyens à ressort.

5. Appareil de mesure de surface selon l'une quelconque des revendications précédentes, **caractérisé en ce que** l'élément d'enclenchement (32) présente une bille.

6. Appareil de mesure de surface selon l'une quelconque des revendications précédentes, **caractérisé en ce que** l'élément d'enclenchement (32) est disposé par rapport aux évidements d'enclenchement (34) de telle manière que la direction d'enclenchement s'étend parallèlement à l'axe de rotation et que l'élément d'enclenchement (32) se déplace parallèlement à l'axe de rotation lors de l'enclenchement ou du désenclenchement.

7. Appareil de mesure de surface selon la revendication 5 ou 6, **caractérisé en ce que** la précontrainte de l'élément d'enclenchement (32) par rapport au couple de rotation d'entraînement d'un moteur électrique (18) de la chaîne cinématique électromotorisée (8) est choisie de telle manière que l'élément d'enclenchement (32) se désenclenche par le moteur électrique (18) lors de la rotation du premier composant (28) par rapport au deuxième composant (30).

8. Appareil de mesure de surface selon l'une quelconque des revendications précédentes, **caractérisé en ce que** l'élément d'enclenchement (32) est relié de manière mobile au composant associé au moyen d'un support.

9. Appareil de mesure de surface selon la revendication 8, **caractérisé en ce que** le support est formé par un ressort à lames (38).

10. Appareil de mesure de surface selon l'une quelconque des revendications précédentes, **caractérisé en ce que** des contacts à bague collectrice (42) sont prévus pour transmettre les signaux de sortie d'une sonde fixée sur le support de sonde à un dispositif d'évaluation de l'appareil de mesure de surface.

11. Appareil de mesure de surface selon l'une quelconque des revendications précédentes, **caractérisé en ce que** l'engrenage à vis sans fin (20) présente une vis sans fin (24) en liaison d'entraînement en rotation avec un moteur électrique (18) de la chaîne cinématique électromotorisée (8), qui est en prise avec une roue à vis sans fin (26).

12. Appareil de mesure de surface selon la revendication 11, **caractérisé en ce que** la roue à vis sans fin (26) est reliée de manière solidaire en rotation à un arbre (12) monté de manière rotative, qui définit l'axe de rotation.
